# EUROPÄISCHE PATENTSCHRIFT

(11) **EP 0 291 919 B1**
(45) Veröffentlichungstag und Bekanntmachung des Hinweises auf die Patenterteilung: **21.07.1993**
(21) Anmeldenummer: 88107857.0
(22) Anmeldetag: 17.05.1988
(51) Int. Cl.: G01S 13/86, G01S 7/02

(54) **Flugzeug-Radaranordnung**
Airborne radar device
Dispositif radar d'avion

(30) Priorität: 20.05.1987 DE 3716857
(43) Veröffentlichungstag der Anmeldung: 23.11.1988
(73) Patentinhaber: Deutsche Aerospace AG, 81663 München (DE)
(72) Erfinder: Jehle, Franz, Dipl.-Ing., D-7900 Ulm (DE); Drescher, Roland, Dipl.-Ing., D-7917 Vöhringen (DE)
(74) Vertreter: Schulze, Harald Rudolf, Dipl.-Ing.

(56) Entgegenhaltungen:
- US-A- 2 691 161
- US-A- 3 568 185
- CONFERENCE PROCEEDINGS MILITARY MICROWAVES '84, London, 24.-26. Oktober 1984, Seiten 3-12, Microwave Exhibitions and Publishers Ltd, Kent, GB; J.D. RHODES: "A review of radar warning receivers"

## Beschreibung

Die Erfindung betrifft eine Flugzeug-Radaranordnung nach dem Oberbegriff des Patentanspruchs 1.

Derartige Radaranordnungen finden vor allem in Kampfflugzeugen Einsatz. Das Suchradar dient zur Entdeckung von Radarzielen in einem bezüglich der Flugzeugachse vorgegebenen azimutalen und elevationalen Winkelbereich. Durch das scharf gebündelte Richtdiagramm ergibt sich eine große Reichweite bei gegebener Sendeleistung und eine hohe Genauigkeit bei der Bestimmung des Zielwinkels. Zum Absuchen des gesamten Winkelbereichs kann das Richtdiagramm mechanisch oder elektronisch geschwenkt werden. Das Radar-Warn-Empfangssystem ist zum Empfang von Signalen gegnerischer Suchradaranlagen vorgesehen, um möglichst frühzeitig die Gefahr des Entdecktwerdens durch solche gegnerischen Suchradars zu erkennen und Gegenmaßnahmen einleiten zu können. Die Radarwarnsysteme enthalten hierzu neben dem Radar-Warn-Empfänger ein Antennensystem für azimutalen Rundumempfang. Das Antennensystem ist üblicherweise aufgebaut aus mehreren, nur schwach bündelnden Einzelstrahlen, die durch winkelversetzte Anordnung den gesamten Azimut überdecken.

Es ist offensichtlich, daß die Gegenmaßnahmen gegen die Entdeckung durch gegnerische Suchradars umso wirkungsvoller und die eigene Sicherheit damit umso größer ist, je frühzeitiger und genauer eine solche Bedrohungssituation erkannt wird.

Aus der US-A-2 691 161 ist ein Navigationssystem für Schiffe oder Flugzeuge bekannt. Dabei wird eine Radaranlage, die zur Erfassung der relativen Position des Schiffes oder Flugzeuges dient, mit einer im Radiofrequenzbereich arbeitenden Peilanlage, die zur Bestimmung der absoluten Position dient, kombiniert. Die für die Radaranlage und die Peilanlage erforderlichen richtungsempfindlichen Antennen sind an einer gemeinsamen rotierenden Drehachse befestigt. Das von der richtungsempfindlichen Peilantenne, z.B. einer Rahmenantenne, erzeugte elektrische Signal wird ausgewertet mit Hilfe eines daran angeschlossenen Regelverstärkers und eines Signalempfängers, der an eine richtungsunempfindlichen Antenne angeschlossen ist. Die von der Radar- und der Peilanlage ermittelten Positionsangaben werden auf einer gemeinsamen Kathodenstrahlröhre angezeigt.

Der Erfindung liegt daher die Aufgabe zugrunde, bei einer Flugzeug-Radaranordnung der eingangs genannten Art die Erkennung einer Bedrohungssituation durch gegnerische Suchradars zu verbessern.

Die Erfindung ist im Patentanspruch 1 beschrieben. Die Unteransprüche enthalten vorteilhafte Ausgestaltungen und Weiterbildungen der Erfindung.

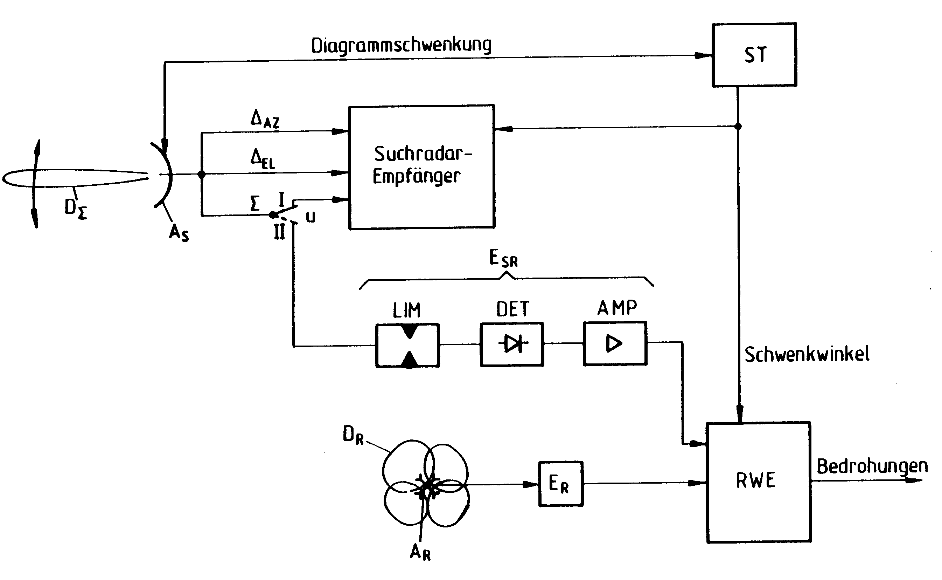

In der Abbildung ist eine bevorzugte Ausführungsform der Erfindung skizziert.

Die scharf bündelnde Sende-Empfangs-Antenne A_{S} des Flugzeug-Suchradar-Systems, das für Monopulsbetrieb ausgelegt sei, erzeugt ein schmales, bleistiftförmiges Richtdiagramm D_{Σ} und weist damit einen hohen Antennengewinn auf. Das Richtdiagramm ist innerhalb eines vorgegebenen (Raum-) Winkelbereichs schwenkbar. Für die Diagrammschwenkung ist eine Steuerung ST vorgesehen, in welcher zu jedem Zeitpunkt die genaue Information über den momentanen Schwenkwinkel, d. h. die Ausrichtung des Richtdiagramms vorliegt. Aufbau der Antenne und Möglichkeiten der Diagrammschwenkung sind in verschiedener Form bekannt. So kann die Antenne A_{S} beispielsweise eine mechanisch geschwenkte Schlitzstrahler-Gruppenantenne oder eine phasengesteuerte Gruppenantenne mit elektronischer Diagrammschwenkung sein. Der Sendesignalzweig ist für die Betrachtung der Erfindung ohne weitere Bedeutung und in der Skizze daher nicht enthalten. Die von der Antenne aufgenommenen Signale werden in für Monopulsbetrieb allgemein bekannter Weise zu zwei Differenzsignalen Δ_{AZ} und Δ_{EL} und einem Summensignal Σ zusammengefaßt. Das Summensignal entspricht dem Empfang von Signalen über das eingezeichnete bleistiftförmig schmale Richtdiagramm. Die den Signalen Δ_{AZ} und Δ_{EL} entsprechenden Differenzdiagramme sind gleichfalls allgemein bekannt und der Übersichtlichkeit halber nicht eingezeichnet. Die Signale Δ_{AZ}, Δ_{EL} und Σ sind dem Empfänger des Flugzeug-Suchradars zur Zielentdeckung zugeführt.

Das Radarwarnsystem des Flugzeugs enthält ein den gesamten Azimutbereich abdeckendes Antennensystem A_{R}, einen nicht im einzelnen eingezeichneten ersten Empfangszweig E_{R} und einen Radarwarnempfänger RWE. Das skizzierte Radar-Warn-Antennensystem A_{R} besteht aus vier um jeweils 90° winkelversetzte Einzelstrahler mit kaum gebündelten, sich gegenseitig überlappenden Diagrammen D_{R}. Über diese (feststehenden) Diagramme können Signale aus dem gesamten Azimutwinkelbereich empfangen werden. Wie leicht zu erkennen ist, sind aber der Antennengewinn und die Winkelauflösung (z. B. durch Amplitudenmonopuls) nur gering.

Die über das Antennensystem A_{R} empfangenen Signale sind nach Durchlaufen des ersten Empfangszweigs E_{R} dem Radarwarnempfänger zugeführt, der die Vielzahl der empfangenen Signale nach bekannten Verfahren sortiert und verarbeitet und erkannte Bedrohungen durch gegnerische Radarsysteme meldet.

Soweit entspricht die skizzierte Radaranordnung den bislang eingesetzten Anordnungen. Gemäß der Erfindung ist bei der skizzierten Anordnung nun ein zweiter Empf angszweig E_{SR} vorgesehen, dem die über das Summendiagramm D_{Σ} der Sende-Empfangs-Antenne A_{S} des Suchradars empfangenen Signale zuführbar sind und dessen Ausgang an den Radarwarnempfänger RWE angeschlossen ist.

Der zweite Empfangszweig E_{SR} enthält im wesentlichen einen Signaldetektor (Diode) DET, einen Begrenzer LIM zum Schutz des Signaldetektors und einen Verstärker AMP. Über einem Umschalter U ist das Summensignal Σ des Monopuls-Empfangssystems wahlweise bei Radarbetrieb dem Suchradarempfänger (Schalterstellung I) oder bei reinem Empfangsbetrieb dem zweiten Empfangszweig E_{SR} (Schalterstellung II) zugeführt. Prinzipiell ist auch die Auskopplung eines Signalanteils aus dem Σ-Signalzweig mittels eines Kopplers möglich, wodurch aber der Signalpegel sinkt. Bevorzugt ist aber die Ausführung mit dem Umschalter U. Im Radarwarnempfänger RWE werden die über den zweiten Empfangszweig E_{SR} ankommenden Signale mit der zusätzlichen Information von der Steuerung ST über den momentanen Schwenkwinkel auf eine eventuelle Bedrohungssituation hin überprüft und auch mit den Empfangssignalen des Radarwarnantennensystems A_{R} verknüpft.

Die erfindungsgemäße Flugzeug-Radaranordnung weist einige bemerkenswerte Vorteile auf:
Die genaue Winkelerfassung ermöglicht eine detailiertere Erfassung der Bedrohungssituation. Mit der genauen Winkelinformation können auch Signale von verschiedenen Sendern leicht getrennt werden. Darüber hinaus kann der insbesondere bei hohen Pulsdichten aufwendige Sortierprozess des Radarwarnempfängers für die über die Antenne A_{R} empfangenen Signale einfacher und effektiver durchgeführt werden, wenn die mit der Zusatzinformation des Schwenkwinkels vorliegenden Signale aus dem zweiten Empfangszweig mit den Signalen von der Radar-Warn-Antenne A_{R} verknüpft werden.

Durch den hohen Antennengewinn der Sende-Empfangs-Antenne ergibt sich eine erhebliche Reichweitensteigerung und damit eine frühere Erkennung von Bedrohungssituationen. Dabei ist von besonderer Bedeutung, daß der von der Sende-Empfangs-Antenne überwachte Winkelbereich in Flugrichtung liegt und damit genau den Bereich abdeckt, in dem eine genaue und frühzeitige Erkennung und Indentifizierung von Bedrohungen besonders wichtig ist, da sich der Abstand zu bedrohenden Radars in Flugrichtung schnell verringert und die Bedrohung damit schnell anwächst.

Der Empfang über die Sende-Empfangs-Antenne erweitert auch die Möglichkeit der Auffassung von Radarsignalen mit geringer Leistung, aber längerer Senderaktivität, wie beispielsweise CW-Radars, Pulsradars mit hoher Pulsfolgefrequenz oder mit Pulskompression.

Das Flugzeug-Suchradar ist zwar im allgemeinen nur für einen schmalen Frequenzbereich ausgelegt, die Antenne A_{S} (einschließlich der Monpuls-Diagrammformung) zeigt aber über einen relativ breiten Frequenzbereich einen hohen Gewinn. Der einfach aufgebaute zweite Empfangszweig E_{SR} ist gleichfalls breitbandig, so daß der Radarwarnbetrieb mit der Sende-Empfangs-Antenne und dem zusätzlichen Empfangszweig einen großen Teil der als Bedrohung in Frage kommenden Radarsysteme erfassen kann.

Der zusätzliche Schaltungsaufwand ist gering, so daß weder hinsichtlich Platzbedarf noch Gewicht noch Kosten nennenswerte Nachteile gegenüber den bekannten Anordnungen auftreten. Insbesondere können auch bestehende Radaranordnungen mit geringem Aufwand mit dem zusätzlichen Empfangszweig nachgerüstet werden. Durch die zusätzliche Information muß im wesentlichem lediglich das Auswerteprogramm im Radarwarnempfänger RWE modifiziert werden.

## Patentansprüche

1. Flugzeug-Bord-Radaranordnung, enthaltend ein Suchradar mit einer scharf bündelnden Sende-Empfangsantenne (A_{S}) mit schwenkbarem Richtdiagramm und Radar-Warn-Empfangssystem (RWE), das über einen ersten Empfangszweig mit einer im Azimut nicht oder nur gering gerichteten Antenne (A_{R}) verbunden ist, dadurch gekennzeichnet, daß ein zweiter Empfangszweig (E_{SR}) für die über die Sende-Empfangsantenne (A_{S}) aufgenommenen Signale vorgesehen ist, dessen Ausgangssignale dem Radar-Warn-Empfänger (RWE) zugeführt sind.

2. Anordnung nach Anspruch 1, dadurch gekennzeichnet, daß über einen Umschalter (U) wahlweise der Empfangszweig des Suchradars oder der zweite Empfangszweig (E_{SR}) an die Sende-Empfangs-Antenne (A_{S}) anschließbar sind.

3. Anordnung nach Anspruch 1 oder Anspruch 2, dadurch gekennzeichnet, daß die Sende-Empfangs-Antenne (A_{S}) für Monopuls-Betrieb ausgelegt ist und der zweite Empfangszweig (E_{SR}) für Summensignale, die von der Sende-Empfangs-Antenne (A_{S}) erzeugt werden, vorgesehen ist.

4. Anordnung nach einem der Ansprüche 1 bis 3, dadurch gekennzeichnet, daß der zweite Empfangszweig (E_{SR}) einen Begrenzer (LIM), einen Signaldetektor (DET) und einen Verstärker (AMP) enthält.

## Claims

1. Aircraft on-board radar arrangement comprising a search radar with a sharply focussing transmission-reception antenna (A_{S}) with orientable directive pattern and radar warning reception system (RWE), which is connected by way of a first reception branch with an antenna (A_{R}) not aligned in or aligned only slightly in the azimuth, characterised thereby that a second reception branch (E_{SR}) is provided for the signals received by way of the transmission-reception antenna (A_{S}), the output signals of which are fed to the radar warning receiver (RWE).

2. Arrangement according to claim 1, characterised thereby that selectably either the reception branch of the search radar or the second reception branch (E_{SR}) is connectible to the transmission-reception antenna (A_{S}) by way of a changeover switch (U).

3. Arrangement according to claim 1 or claim 2, characterised thereby that the transmission-reception antenna (A_{S}) is designed for monopulse operation and the second reception branch (E_{SR}) is provided for summation signals which are produced by the transmission-reception antenna (A_{S}).

4. Arrangement according to one of claims 1 to 3, characterised thereby that the second reception branch (E_{SR}) comprises a limiter (LIM), a signal detector (DET) and an amplifier (AMP).

## Revendications

1. Dispositif radar de bord d'avion, comportant un radar de recherche avec une antenne d'émission-réception (A_{S}) à faisceau effilé, avec diagramme directionnel pivotant et avec système récepteur d'avertissement radar (RWE) qui, par une première branche de réception, est relié à une antenne (A_{R}) qui n'est que peu ou pas du tout orientée en azimut, caractérisé par le fait qu'il est prévu, pour les signaux reçus par l'antenne d'émission-réception (A_{S}), une deuxième branche de réception (E_{SR}) dont les signaux de sortie sont amenés au récepteur d'avertissement radar (RWE).

2. Dispositif selon revendication 1, caractérisé par le fait qu'un commutateur (U) permet de raccorder sélectivement la branche de réception du radar de recherche ou la deuxième branche de réception (E_{SR}) à l'antenne d'émission-réception (A_{S}).

3. Dispositif selon revendication 1 ou revendication 2, caractérisé par le fait que l'antenne d'émission-réception (A_{S}) est conçue pour mode à simple impulsion, et la deuxième branche de réception (E_{SR}) pour signaux-somme qui sont produits par l'antenne d'émission-réception (A_{S}).

4. Agencement selon l'une des revendications 1 à 3, caractérisé par le fait que la deuxième branche de réception (E_{SR}) contient un limiteur (LIM), un détecteur de signaux (DET) et un amplificateur (AMP).
